# EUROPEAN PATENT APPLICATION

(11) **EP 4 502 554 A1**
(43) Date of publication of application: **05.02.2025**
(21) Application number: 23774331.5
(22) Date of filing: 16.02.2023
(51) Int. Cl.: G01F 3/22

(54) **GAS METER**

(30) Priority: 25.03.2022 JP 2022049812
(71) Applicant: Panasonic Intellectual Property Management Co., Ltd., Kadoma-shi, Osaka 571-0057 (JP)
(72) Inventor: UCHIMURA, Kazuya, Osaka 571-0057 (JP); YOKOHATA, Mitsuo, Osaka 571-0057 (JP)
(74) Representative: SSM Sandmair
(86) International application number: PCT/JP2023/005502
(87) International publication number: WO 2023/181732

(57) **Abstract**

A gas meter located at each of consumer's places includes: an acceleration sensor that detects acceleration; and a controller. When the acceleration detected by the acceleration sensor is a threshold or more, the controller changes from a normal mode to a calculation mode in which power consumption of the gas meter is larger than power consumption of the gas meter in the normal mode. The controller changes the threshold in accordance with predetermined information.

## Description

### Technical Field

The present invention relates to a gas meter.

### Background Art

Conventionally known is a seismic sensor that operates in a power saving mode or a calculation mode that is larger in power consumption than the power saving mode (PTL 1). When the seismic sensor determines based on acceleration measured by an acceleration measurer that an earthquake has occurred, the seismic sensor changes from the power saving mode to the calculation mode in which an earthquake index value is calculated based on the acceleration. In contrast, when the seismic sensor determines that the earthquake has not occurred, the seismic sensor is maintained in the power saving mode. Thus, an operating mode can be prevented from being the calculation mode at all times, and this contributes to a reduction in power consumption.

### Citation List

### Patent Literature

PTL 1: Japanese Patent No. 6,666,023

### Summary of Invention

### Technical Problem

However, since the gas meter is located outdoors, the gas meter is influenced by many noises caused due to, for example, vibrations generated when an automobile, a train, or the like passes, vibrations generated by a rainstorm, resonant vibrations generated when gas flows through a gas channel, or the like. Therefore, due to changes in the acceleration based on these unexpected vibrations, the gas meter repeatedly changes from the power saving mode to the calculation mode in some cases. As a result, the power consumption becomes large in some cases.

An object of the present invention is to provide a gas meter which can reduce power consumption more than before.

### Solution to Problem

A gas meter of the present invention is a gas meter located at each of consumer's places. The gas meter includes: an acceleration sensor that detects acceleration; and a controller. When the acceleration detected by the acceleration sensor is a threshold or more, the controller changes from a normal mode to a calculation mode in which power consumption of the gas meter is larger than power consumption of the gas meter in the normal mode. The controller changes the threshold in accordance with predetermined information.

According to the present invention, the threshold based on which the normal mode is changed to the calculation mode is changed in accordance with the predetermined information. In this case, when the predetermined information is, for example, the number of times of the change (the number of times of the change from the normal mode to the calculation mode), the controller changes the threshold in accordance with the number of times of the change. In this case, when the number of times of the change increases, the threshold is increased. Thus, the number of times of the change from the normal mode to the calculation mode can be reduced. Therefore, the normal mode can be prevented from being unexpectedly changed to the calculation mode by many noises caused due to, for example, vibrations generated when an automobile, a train, or the like passes. Thus, the power consumption can be reduced more than before.

In the above invention, the calculation mode may be an operating mode in which an earthquake index value is calculated by the controller based on the acceleration.

According to the above configuration, the earthquake index value is calculated based on the acceleration. Therefore, the change to the calculation mode in which the power consumption is larger than that of the normal mode hardly occurs.

In the above invention, as the predetermined information, the controller may acquire a history of the numbers of times of the change from the normal mode to the calculation mode in respective predetermined periods of time.

According to the above configuration, the threshold can be appropriately changed in accordance with the history of the numbers of times of the change in respective predetermined periods of time.

### Advantageous Effects of Invention

The present invention can provide the gas meter which can reduce the power consumption more than before.

### Brief Description of Drawings

FIG. 1 is a block diagram showing a gas management system including a gas meter according to one embodiment of the present invention.
FIG. 2 is a block diagram showing components of the gas meter in the gas management system of FIG. 1.
FIG. 3 is a diagram showing examples of the numbers of times of a change from a normal mode to a calculation mode in respective time ranges of a day.
FIG. 4 is a diagram showing thresholds of acceleration which have been changed in accordance with the numbers of times of the change which are shown in FIG. 3.

### Description of Embodiments

Hereinafter, a gas management system according to an embodiment of the present invention will be described with reference to the drawings. The gas management system described below is merely one embodiment of the present invention. Therefore, the present invention is not limited to the following embodiment, and additions, deletions, and modifications may be made within the scope of the present invention.

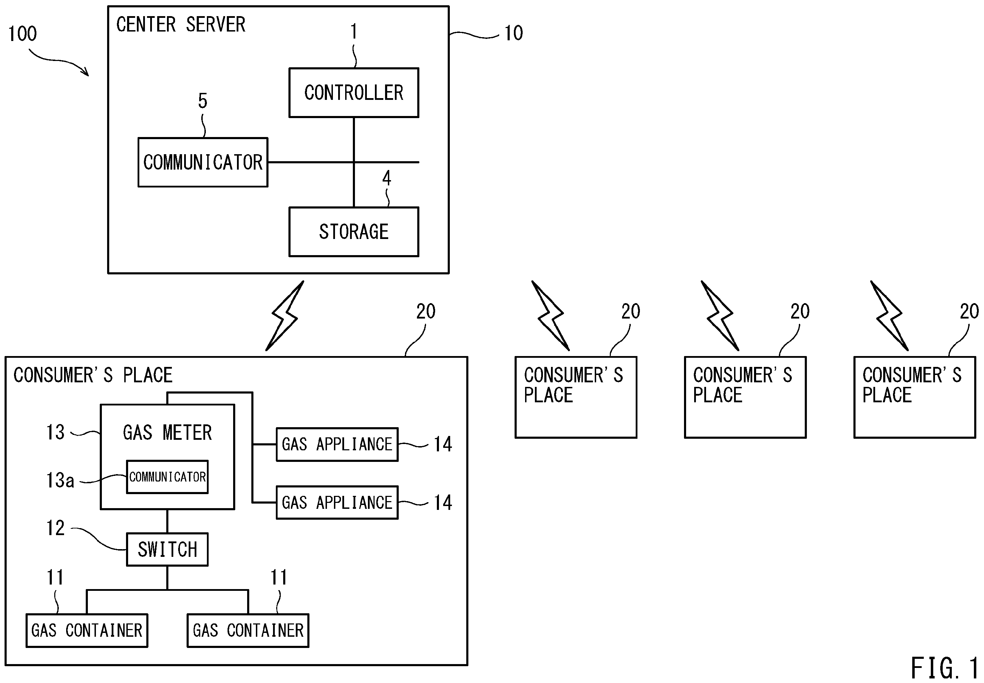

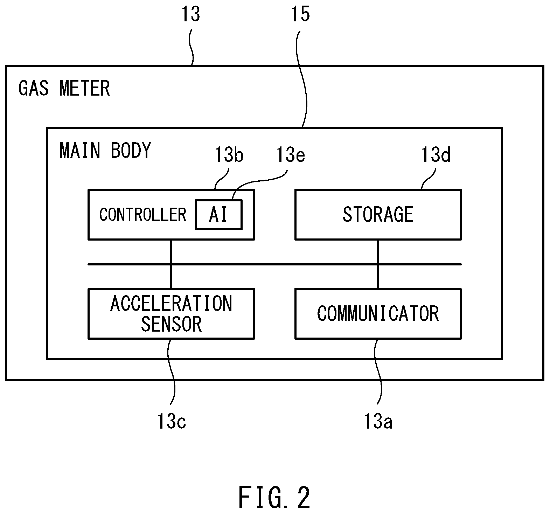

FIG. 1 is a block diagram showing a gas management system 100 including a gas meter 13 according to one embodiment of the present invention. FIG. 2 is a block diagram showing components of the gas meter 13 in the gas management system 100 of FIG. 1.

As shown in FIG. 1, the gas management system 100 includes a center server 10 and consumer's places 20. FIG. 1 shows four consumer's places 20. However, in the earthquake security system 100, the number of consumer's places 20 may be plural, may be three or less, or may be five or more.

As one example, each of the consumer's places 20 includes two gas containers 11, a switch 12, the gas meter 13, and two gas appliances 14. Moreover, examples of the consumer's place 20 include a hospital, a school, a municipality facility, a nursing facility, an ordinary home, and a commercial facility. However, the consumer's place is not limited to these and may be a building that may use gas.

The gas container 11 is also called a gas bomb and is filled with gas, such as LP gas (liquefied petroleum gas). In the following description, the LP gas is simply referred to as gas. Herein, the gas is supplied from the gas container 11 to the gas appliance 14. However, the gas may be supplied to each consumer's place 20 through a conduit embedded underground. The switch 12 switches a gas supply passage such that the gas in one of the two gas containers 11 is supplied to the consumer's place 20. Thus, even when the gas in one of the two gas containers 11 runs out, the gas in the other gas container 11 may be supplied to the gas appliance 14.

The gas meter 13 measures the flow rate of the gas to be supplied from the gas container 11 to the gas appliance 14 in the consumer's place 20. As one example, the gas meter 13 may include, as a measurer, an ultrasonic flow meter which measures the flow rate from a propagation velocity of ultrasound in a pipeline through which the gas flows. Moreover, the gas meter 13 may include, for example, a shutoff valve that shuts off the gas supply passage when an abnormality is detected.

The gas meter 13 includes a communicator 13a. The communicator 13a has a function of performing wireless communication with the center server 10. As a wireless communication system between the communicator 13a and the center server 10, a communication network, such as the Internet, a LAN, or a LPWA (Low Power Wide Area), can be used. The communicator 13a periodically transmits information regarding the amount of gas used in the consumer's place 20 to the center server 10 together with information regarding a date on which the gas is used, an ID that specifies the consumer's place 20, and location area information of the consumer's place 20. The communicator 13a may not be included in the gas meter 13 and may be an external slave device and communicate with the gas meter 13.

For example, each of the gas appliances 14 is a gas stove, a gas-powered water heater, a gas-powered fan heater, or the like. However, the gas appliance 14 is not limited to these and may be an appliance that consumes gas.

The center server 10 includes a controller 1, a storage 4, and a communicator 5. The controller 1 includes: a microcontroller including a CPU (Central Processing Unit) and a memory (a ROM (Read Only Memory) and a RAM (Random Access Memory)) storing a program; an ASIC (Application Specific Integrated Circuit); or the like. As the storage 4, various memories, a hard disk, and the like may be used.

As shown in FIG. 2, in addition to the communicator 13a, the gas meter 13 includes: a controller 13b including artificial intelligence 13e; an acceleration sensor 13c; a storage 13d storing various information; and a main body 15 that is a casing.

The acceleration sensor 13c is, for example, a known sensor using a piezoelectric element. The acceleration sensor 13c is located in the main body 15. Specifically, for example, the acceleration sensor 13c is located on a control board that is a printed wiring board located in the main body 15. For example, when vibrations occur, the acceleration sensor 13c detects acceleration of acceleration axes that are three axes orthogonal to each other.

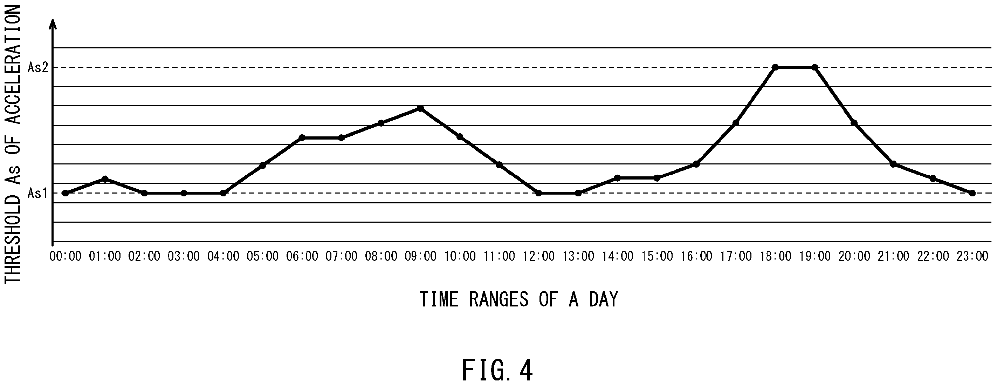

The storage 13d stores a threshold As (described later with reference to FIG. 4) of the acceleration detected by the acceleration sensor 13c. Moreover, the storage 13d stores a below-described history of the numbers of times of the change from a normal mode to a calculation mode in respective predetermined periods of time.

The controller 13b receives the acceleration detected by the acceleration sensor 13c. When the acceleration detected by the acceleration sensor 13c is the threshold As or more which is stored in the storage 13d, the controller 13b changes from the normal mode to the calculation mode. To be specific, the normal mode is an operating mode of the controller 13b when the acceleration detected by the acceleration sensor 13c is less than the threshold As. The power consumption in the normal mode is smaller than the power consumption in the calculation mode.

On the other hand, the calculation mode is an operating mode of the controller 13b when the acceleration detected by the acceleration sensor 13c is the threshold As or more. In other words, the calculation mode is an operating mode including processing of calculating an earthquake index value by the controller 13b based on the acceleration. When the acceleration is the threshold As or more, the controller 13b calculates the earthquake index value based on the acceleration in the calculation mode. The power consumption in the calculation mode is larger than the power consumption in the normal mode. As the earthquake index value, the controller 13b can calculate various values by which the scales of earthquakes can be compared with each other, such as a SI (Spectral Intensity) value, seismic intensity, magnitude, amplitude, and displacement, which are generally used as numerical values indicating the degree of damage of a building.

The controller 13b changes the threshold As in the following manner. First, the controller 13b counts the number of times of the change from the normal mode to the calculation mode every predetermined period of time (every hour, for example). The controller 13b makes the storage 13d store the history of the counted numbers of times of the change as predetermined information. In this case, the number of times of the change may be an average value of the numbers of times of the change in respective predetermined periods of time in a predetermined period (for example, one week or one month) in the past or may be an average value of the numbers of times of the change in respective predetermined periods of time on the same day of a week in the predetermined period in the past.

The controller 13b changes the threshold As in accordance with the history of the numbers of times of the change as the predetermined information. In this case, the controller 13b can change the threshold As by the artificial intelligence 13e by using the number of times of the change as an input. Changing the threshold As by the artificial intelligence 13e is based on machine learning or deep learning. The threshold As is changed by the artificial intelligence 13e. However, the present embodiment is not limited to this.

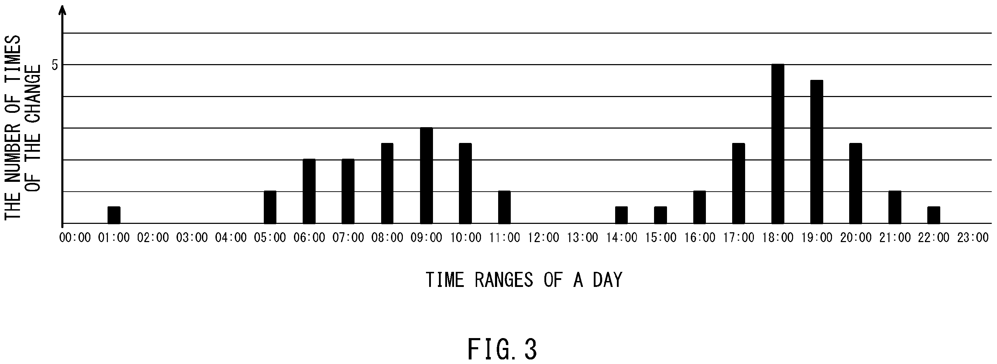

Changing the threshold As will be described in detail. FIG. 3 is a diagram showing examples of the numbers of times of the change from the normal mode to the calculation mode in respective time ranges of a day. FIG. 4 is a diagram showing the thresholds As of the acceleration which have been changed in accordance with the numbers of times of the change which are shown in FIG. 3.

FIG. 3 shows examples of the numbers of times of the change from the normal mode to the calculation mode in respective time ranges of a day. In FIG. 3, each of a time range from 6 o'clock to 10 o'clock and a time range from 17 o'clock to 20 o'clock may overlap, for example, a time range of commuting by automobiles, trains, and the like. Conventionally, the number of times the acceleration detected by the acceleration sensor 13c reaches the threshold or more increases by the influence of, for example, vibrations generated by the above commuting means. Conventionally, to collect information of a relatively small earthquake by which the gas does not have to be shut off, for example, an acceleration value by which the earthquake having the seismic intensity of 4 can be detected is set as the threshold. However, the acceleration value by which the earthquake having the seismic intensity of 4 can be detected is a relatively small value as the acceleration value. Therefore, the mode is easily changed to the calculation mode even by vibrations other than the earthquake.

On the other hand, in the present embodiment, the controller 13b changes the threshold As in accordance with the number of times of the change. The threshold As is changed so as to be different when the number of times of the change is different. Specifically, as shown in FIG. 4, when the number of times of the change is relatively large, the threshold As is set so as to be relatively large. On the other hand, when the number of times of the change is relatively small, the threshold As is set so as to be relatively small. The thresholds As are relatively large in the time range from 6 o'clock to 10 o'clock and the time range from 17 o'clock to 20 o'clock in each of which the number of times of the change is relatively large. On the other hand, the thresholds As are relatively small in, for example, a time range in the middle of the night in which the number of times of the change is relatively small.

As above, the threshold As is not set uniformly but is set so as to be different in accordance with the number of times of the change. Therefore, even in a time range in which the acceleration detected by the acceleration sensor 13c is large, the normal mode is hardly changed to the calculation mode. In FIG. 4, As1 denotes a lower limit of the threshold, and As2 denotes an upper limit of the threshold. To be specific, the threshold As is changed in a range of As1 or more and As2 or less. The upper limit As2 of the threshold is a threshold by which the gas meter 13 can detect the earthquake having such seismic intensity that the gas channel should be shut off. The upper limit As2 is set on the basis that: from the viewpoint of a security function of the gas meter 13, the gas channel needs to be shut off when a large earthquake has occurred; but if the threshold is increased endlessly, the large earthquake cannot be detected.

As described above, according to the gas meter 13 of the present embodiment, the threshold As of the acceleration based on which the normal mode is changed to the calculation mode is changed in accordance with the number of times of the change. In this case, the controller 13b increases the threshold As when the number of times of the change increases. Thus, the normal mode is hardly changed to the calculation mode. Therefore, the normal mode can be prevented from being unexpectedly changed to the calculation mode by many noises caused due to, for example, vibrations generated when an automobile, a train, or the like passes. Thus, the power consumption can be reduced more than before. Moreover, the gas meter 13 can detect the earthquake having such a seismic intensity that the gas channel should be shut off, and in addition, a relatively small earthquake can be also detected in a time range in which the number of vibrations is small.

### Modified Examples

The present invention is not limited to the above embodiment, and various modifications may be made within the scope of the present invention. Examples will be described below.

In the above embodiment, for example, to warrant battery driving for ten years, an acceptable upper limit of the number of times of the change in a predetermined period (one month, for example) may be determined. Moreover, the number of times of the change in a predetermined period after the threshold is changed may be estimated from the numbers of times of the change in respective predetermined periods of time in the past and their corresponding thresholds, and the changed threshold may be determined such that the estimated number of times of the change is set to the above upper limit or less.

Moreover, in the above embodiment, the number of times of the change from the normal mode to the calculation mode is used as the predetermined information. However, the above embodiment is not limited to this. The predetermined information may be, for example, information regarding a construction work time of road construction work or rail construction work. In this case, by increasing the threshold As corresponding to a time range in which construction work is performed, the number of times of the change from the normal mode to the calculation mode can be reduced.

Moreover, in the above embodiment, the calculation mode is an operating mode in which the earthquake index value is calculated by the controller 13b based on the acceleration. However, the above embodiment is not limited to this. The calculation mode may be an operating mode in which the power consumption is larger than that of the normal mode. For example, the calculation mode may be an operating mode in which the number of times the controller 13b acquires the acceleration detected by the acceleration sensor 13c is larger than that of the normal mode. In this case, as the number of times the controller 13b acquires the acceleration increases, the power consumption may increase. Therefore, by increasing the threshold As, the change to the calculation mode hardly occurs.

Moreover, in the above embodiment, two gas containers 11 and two gas appliances 14 are described. However, the above embodiment is not limited to this. The number of gas containers 11 may be one or may be three or more, and the number of gas appliances 14 may be one or may be three or more.

Moreover, in the above embodiment, the gas container 11 is filled with the LP gas (liquefied petroleum gas) that is one example of the gas. However, the above embodiment is not limited to this. The gas container 11 may be filled with another gas, such as oxygen.

### Reference Signs List

- 10: center server
- 13: gas meter
- 13a: communicator
- 13b: controller
- 13c: acceleration sensor
- 13d: storage
- 13e: artificial intelligence
- 20: consumer's place
- 100: gas management system
- As: threshold

## Claims

1. A gas meter located at each of consumer's places,
the gas meter comprising:
an acceleration sensor that detects acceleration; and
a controller, wherein:
when the acceleration detected by the acceleration sensor is a threshold or more, the controller changes from a normal mode to a calculation mode in which power consumption of the gas meter is larger than power consumption of the gas meter in the normal mode; and
the controller changes the threshold in accordance with predetermined information.

2. The gas meter according to claim 1, wherein the calculation mode is an operating mode in which an earthquake index value is calculated by the controller based on the acceleration.

3. The gas meter according to claim 1 or 2, wherein as the predetermined information, the controller acquires a history of the numbers of times of the change from the normal mode to the calculation mode in respective predetermined periods of time.
